# EUROPEAN PATENT SPECIFICATION

(11) **EP 1 970 586 B1**
(45) Date of publication and mention of the grant of the patent: **30.11.2011**
(21) Application number: 06843021.4
(22) Date of filing: 21.12.2006
(51) Int. Cl.: F16D 3/84, B60B 35/14, F16D 3/20

(54) **JOINT ASSEMBLY AND VEHICLE-USE BEARING UNIT, AND AXLE MODULE PROVIDED WITH THEM**
VERBINDUNGSANORDNUNG UND LAGEREINHEIT ZUR VERWENDUNG IM FAHRZEUG SOWIE DAMIT VERSEHENES ACHSMODUL
ENSEMBLE JOINT ET UNITE DE ROULEMENT POUR USAGE DANS VEHICULE, ET MODULE D'ESSIEU MIS EN OEUVRE AVEC CEUX-CI

(30) Priority: 22.12.2005 JP 2005370150; 11.01.2006 JP 2006003353; 19.01.2006 JP 2006011039; 13.02.2006 JP 2006034924
(43) Date of publication of application: 17.09.2008
(73) Proprietor: NTN Corporation, Osaka-shi, Osaka 550-0003 (JP)
(72) Inventor: UMEKIDA, Mitsuru, Iwata-shi, Shizuoka 4388510 (JP); FUKUSHIMA, Shigeaki, Iwata-shi, Shizuoka 4388510 (JP); YAMAUCHI, Kiyoshige, Iwata-shi, Shizuoka 4388510 (JP); OZAWA, Masahiro, Iwata-shi, Shizuoka 4388510 (JP); KAWAMURA, Hiroshi, Iwata-shi, Shizuoka 4388510 (JP)
(74) Representative: Cohausz & Florack
(86) International application number: PCT/JP2006/325547
(87) International publication number: WO 2007/072926

(56) References cited:
- JP-A- 57 171 124
- JP-A- 57 171 124
- JP-A- 61 184 128
- JP-A- 2005 256 938
- JP-A- 2005 256 938
- JP-U- 61 184 128
- US-A- 5 312 300
- US-A- 5 312 300
- US-A- 5 931 738
- US-A1- 2005 051 973

## Description

### Field of the Invention

The present invention relates to a joint assembly comprising a pair of constant velocity universal joints and a drive shaft connected to them; and a wheel bearing assembly (hereinafter referred to as an "axle module) having a wheel bearing apparatus formed of a united combination of a secured type constant velocity universal joint and a double row rolling bearing for rotationally supporting a wheel of vehicle relative to a knuckle forming a suspension apparatus and the joint assembly.

### Description of Background Art

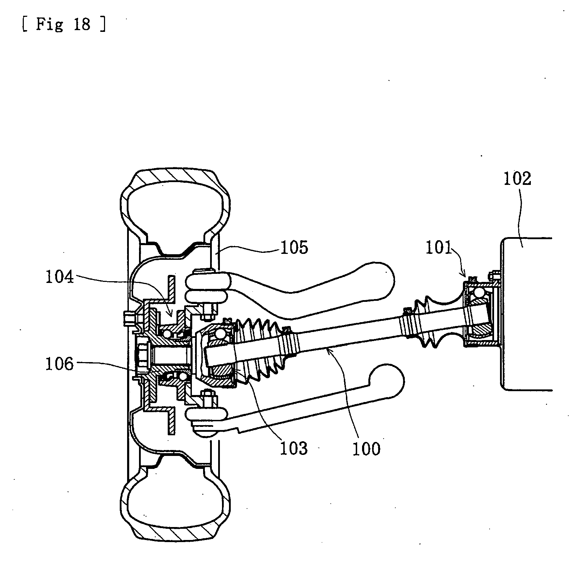

A power transmitting apparatus for transmitting an engine power of vehicle such as an automobile etc. to wheels is required not only to transmit the engine power to wheels but to allow radial and axial displacements and a moment displacement of wheels caused by bounds of wheel or turning of vehicle during running on a rough road. Accordingly as shown in Fig. 18, an engine side (e.g. a transmission) and a wheel are connected via a drive shaft 100 one end of which is connected to a differential apparatus 102 via a slide type constant velocity universal joint 101 and the other end of which is connected to a wheel 105 via a wheel bearing apparatus 104 including a secured type constant velocity universal joint 103.

The wheel bearing apparatus 104 comprises a so-called "third generation" type wheel bearing 106 and the secured type constant velocity universal joint 103 detachably connected to the wheel bearing apparatus 106. In recent years it is a tendency that the third generation structure is shifted to a so-called "fourth generation" structure in which the wheel bearing 106 and the secured type constant velocity universal joint 103 are combined as a unit.

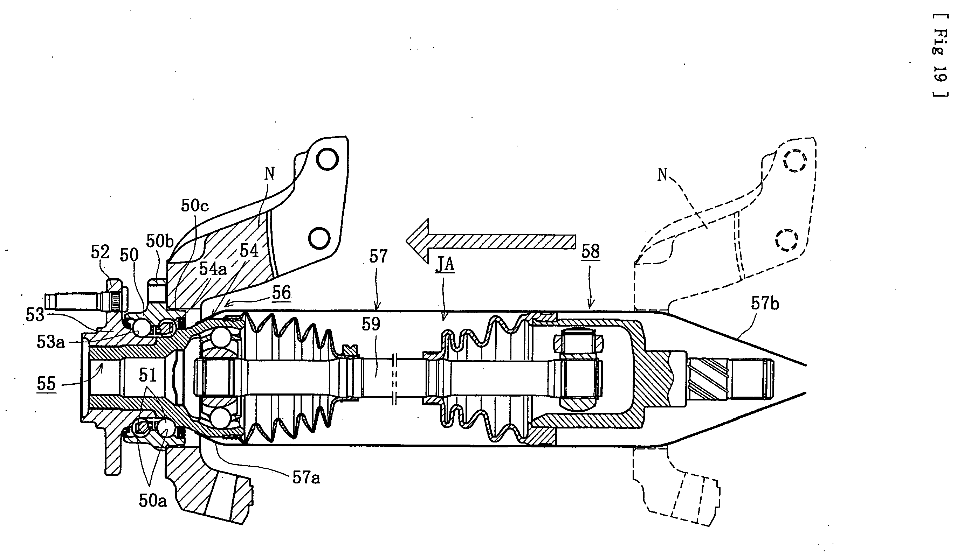

In an axle module in which a wheel bearing apparatus of the fourth generation, a constant velocity universal joint forming the wheel bearing apparatus and a drive shaft connected to a pair of constant velocity universal joint including said constant velocity universal joint are combined as a unit, it is known that further combine a unit cover for improving the workability of assembly of the axle module to a vehicle as well as for protecting a boots of the constant velocity universal joint during assembly and transportation of the axle module. As shown in Fig. 19 such an axle module is formed by a wheel bearing apparatus comprising an outer member 50 formed on its outer circumferential surface with a body mounting flange 50b adapted to be mounted on a knuckle "N" a fitting surface 50c to be inserted into the knuckle "N" and on its inner circumferential surface with double row outer raceway surfaces 50a, 50a; and an inner member 55 including a hub wheel 53 inserted into the outer member 50 via double row balls 51, 51 and integrally formed on its one end with a wheel mounting flange 52 and on its outer circumferential surface with one inner raceway surface 53a opposite to one of the double row outer raceway surfaces 50a, 50a and also including an outer joint member 54 formed on its outer circumferential surface with another inner raceway surface 54a opposite to the other one of the double row outer raceway surfaces 50a, 50a; and a joint assembly "JA" connected to the wheel bearing apparatus. In addition the outer diameter of the fitting surface 50c is formed larger than the maximum outer diameter of the constant velocity universal joint and a unit cover 57 of elastomer formed as a cylindrical member for covering the periphery of the joint assembly "JA" and formed with contracted portions 57a, 57a at its opposite ends. The joint assembly "JA" comprises a pair of constant velocity universal joints 56, 58 and a drive shaft 59 connected to these constant velocity universal joints 56, 58.

The provision of the unit cover 57 for covering the periphery of the joint assembly "JA" enables to protect the joint assembly "JA" and to make a handling such as transportation easy. In addition provision of the elastic contracted portions 57a, 57b on the unit cover 57 enables to easily mount by a "one-touch" manner "the unit cover 57 onto the outer joint member 54 of the constant velocity universal joint 56 and to prevent the unit cover 57 from being fallen out (see Japanese Laid-open Patent Publication No. 256938/2005).

### Disclosure of the Invention

### Problems to be solved by the Invention

In such an axle module of the prior art, the constant velocity universal joints 56, 58 tend to be hung down by their own weight. However since the unit cover 57 of the prior art cannot prevent the hanging down of them, it is difficult to assemble the axle module to the knuckle "N" and to handle it during its packaging or transportation.

It is, therefore, an object of the present invention to provide a joint assembly comprising a pair of constant velocity universal joints and a drive shaft connecting them which can protect the constant velocity universal joints and prevent the hanging down of them by their own weight.

A further object of the present invention is to provide an axle module which can improve the workability in assembly of it to a vehicle and to simplify the assembly and transportation of it.

### Means for solving the problems

For achieving the objects of the present invention above, there is provided a joint assembly comprising the features of claim 1.

According to the joint assembly comprising a pair of constant velocity universal joints and a drive shaft connected to the constant velocity universal joints of the present invention of claim 1, since the cylindrical unit cover is arranged so that it covers outer circumferential surfaces of the pair of constant velocity universal joints and boots thereof, the unit cover being formed of elastomer by injection molding and having on its inner circumferential surface a configuration corresponding to configurations of outlines of the pair of constant velocity universal joints and the boots, it is possible to protect the constant velocity universal joints and prevent the hanging down of them by their own weight.

It is preferable as defined in claim 2 that the unit cover is separated in its radial direction. This enables assembly of the unit cover easy.

It is also preferable as defined in claim 3 that the unit cover is formed so that it has an outline of a streamlined configuration recessed at its substantially center in an axial direction. This enables to further improve the workability in assembly of the axle module to the knuckle and to reduce the weight and size thereof.

According to the present invention there is also provided an axle module comprising: a wheel bearing apparatus, the wheel bearing including: an outer member formed on its outer circumferential surface with a body mounting flange adapted to be mounted on a knuckle forming a portion of a suspension apparatus and a fitting surface and on its inner circumferential surface with double row outer raceway surfaces; an inner member including a hub wheel integrally formed on its one end with a wheel mounting flange and on its outer circumferential surface with one inner raceway surface opposite to one of the double row outer raceway surfaces and also including an outer joint member of the constant velocity universal joint adapted to be fitted into the hub wheel and formed on its outer circumferential surface with another inner raceway surface opposite to the other one of the double row outer raceway surfaces; and a plurality of rolling elements freely rollably contained between the inner member and the outer member; a joint assembly connected to the hub wheel via a torque transmittable manner; and a unit cover for covering the joint assembly characterized in that the outer diameter of the fitting surface of the outer member is formed larger than the outer diameter of the unit cover (claim 4).

According to the axle module of the present invention of claim 4, since the outer diameter of the fitting surface of the outer member is formed larger than the outer diameter of the unit cover, it is possible to make the assembly and transportation of the axle module easy and simple and thus to improve the assembly of it to a vehicle.

### Best mode for carrying out the Invention

The best mode for carrying out the present invention is an axle module comprising: a wheel bearing apparatus, the wheel bearing including: an outer member formed on its outer circumferential surface with a body mounting flange adapted to be mounted on a knuckle forming a portion of a suspension apparatus and a fitting surface and on its inner circumferential surface with double row outer raceway surfaces; an inner member including a hub wheel integrally formed on its one end with a wheel mounting flange and on its outer circumferential surface with one inner raceway surface opposite to one of the double row outer raceway surfaces and also including an inner ring or outer joint member of the constant velocity universal joint adapted to be fitted onto or into the hub wheel and formed on its outer circumferential surface with another inner raceway surface opposite to the other one of the double row outer raceway surfaces; and a plurality of rolling elements freely rollably contained between the inner member and the outer member; a secured type joint connected to the hub wheel via a torque transmittable manner; a drive shaft one end of which is connected to the constant velocity universal joint; and further comprising a joint assembly including a slide type constant velocity universal joint; characterized in that a cylindrical unit cover is arranged so that it covers outer circumferential surfaces of the pair of constant velocity universal joints and boots thereof, the unit cover being formed of elastomer by injection molding and having on its inner circumferential surface a configuration corresponding to configurations of outlines of the pair of constant velocity universal joints and the boots; and that the outer diameter of the fitting surface of the outer member is formed larger than the outer diameter of the unit cover.

### Embodiment 1

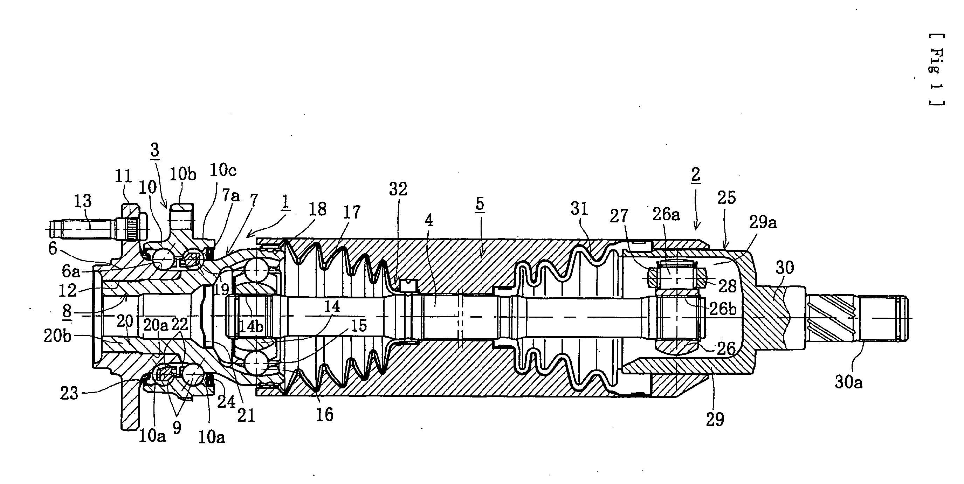

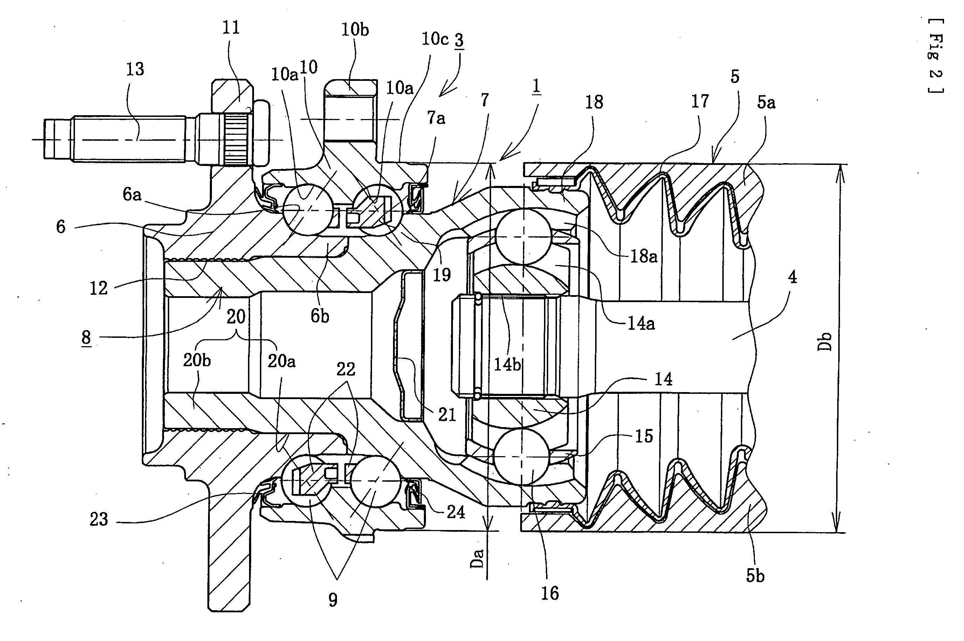

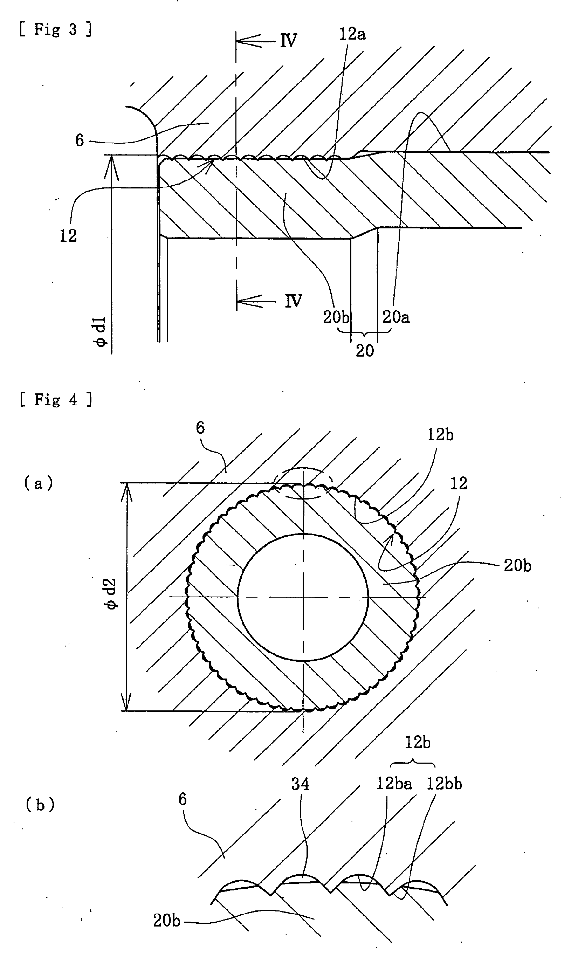

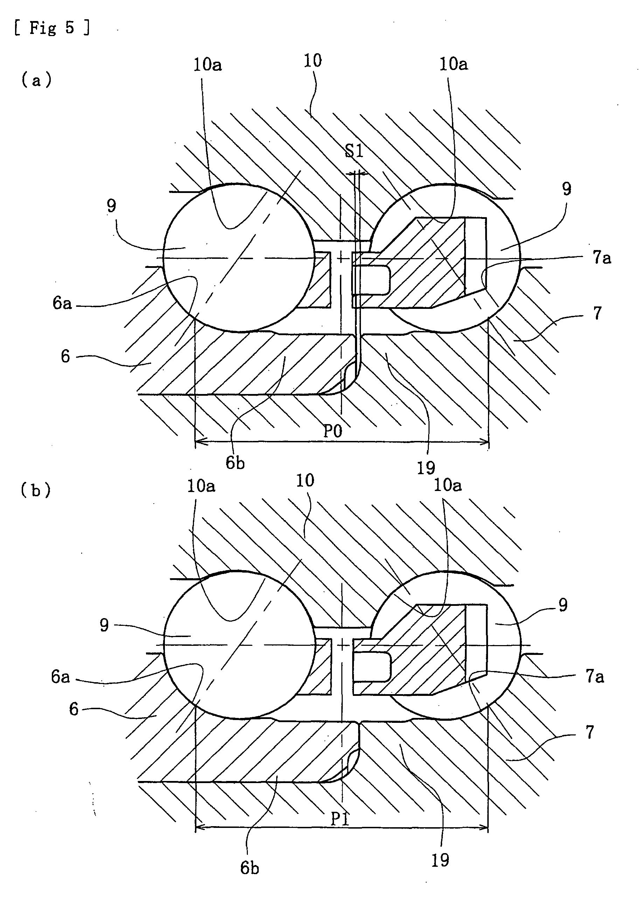

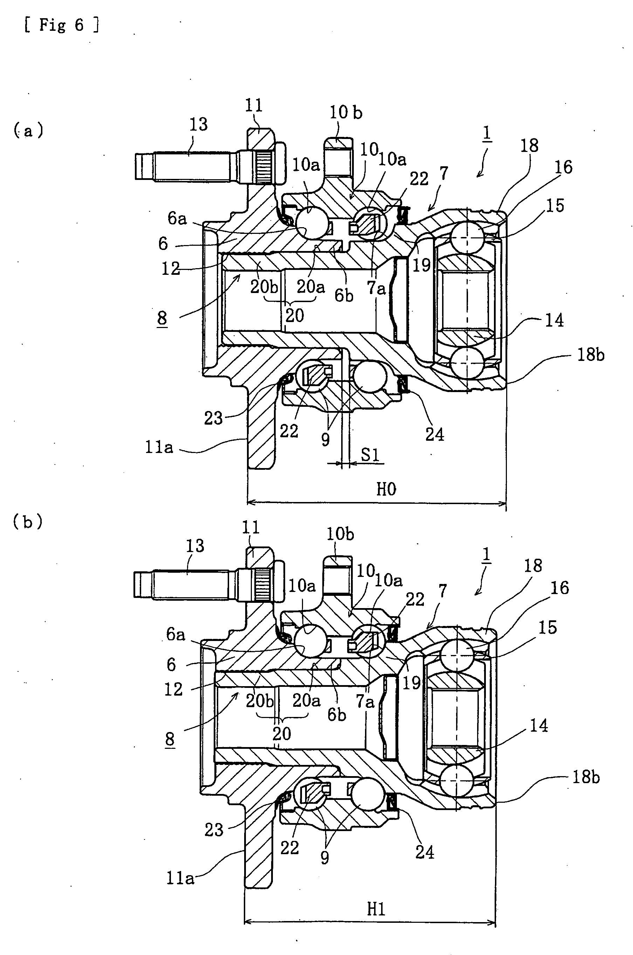

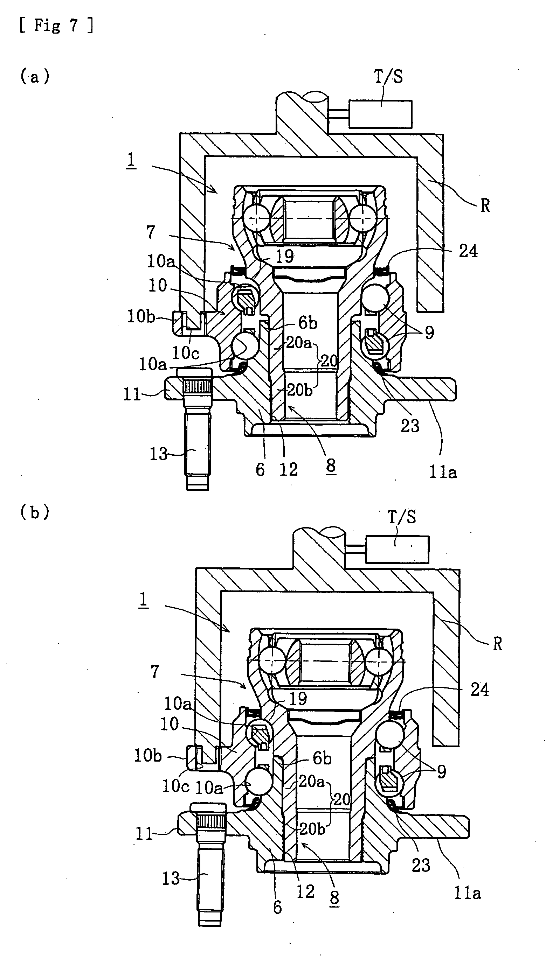

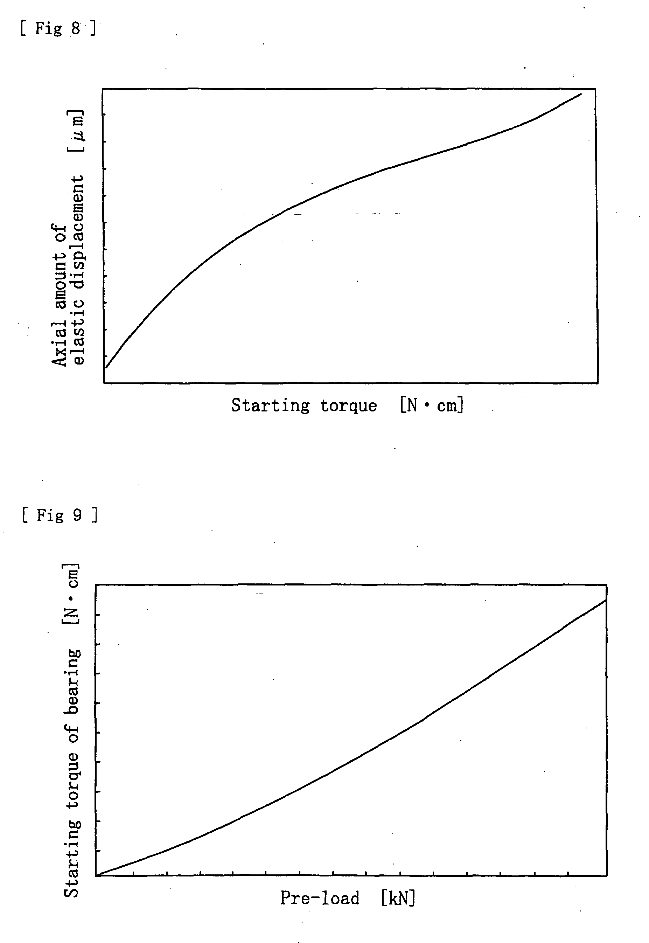

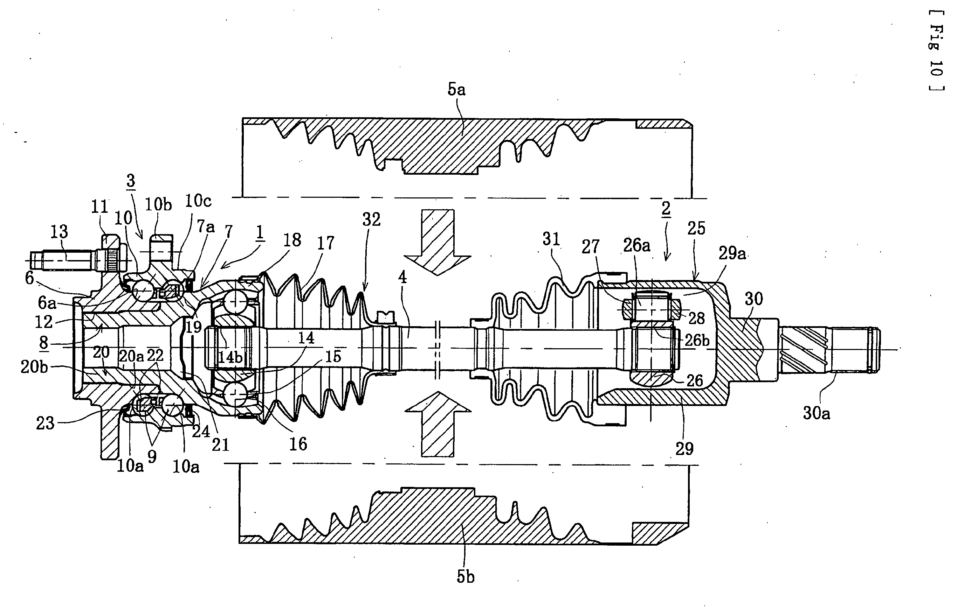

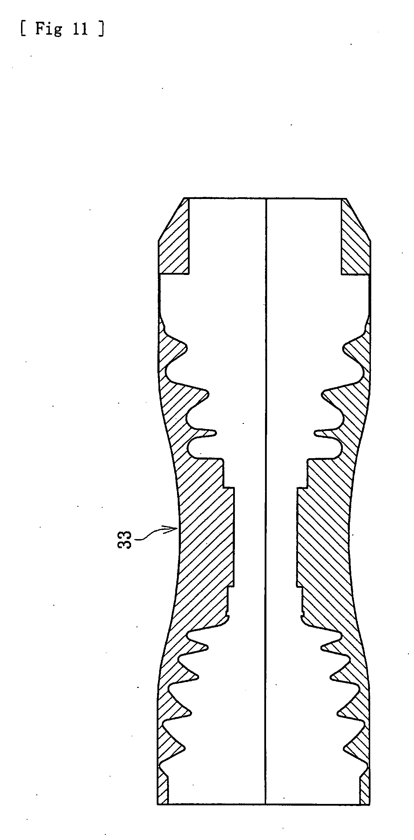

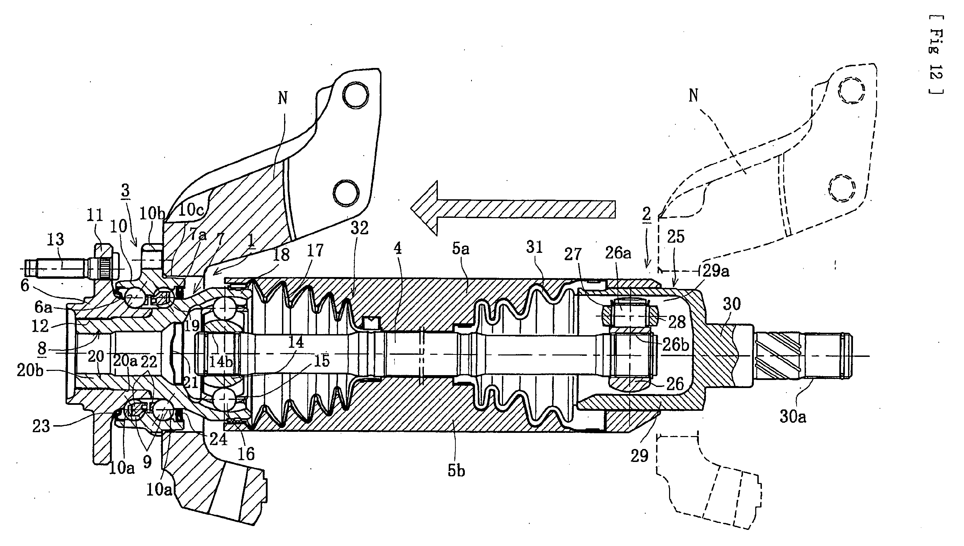

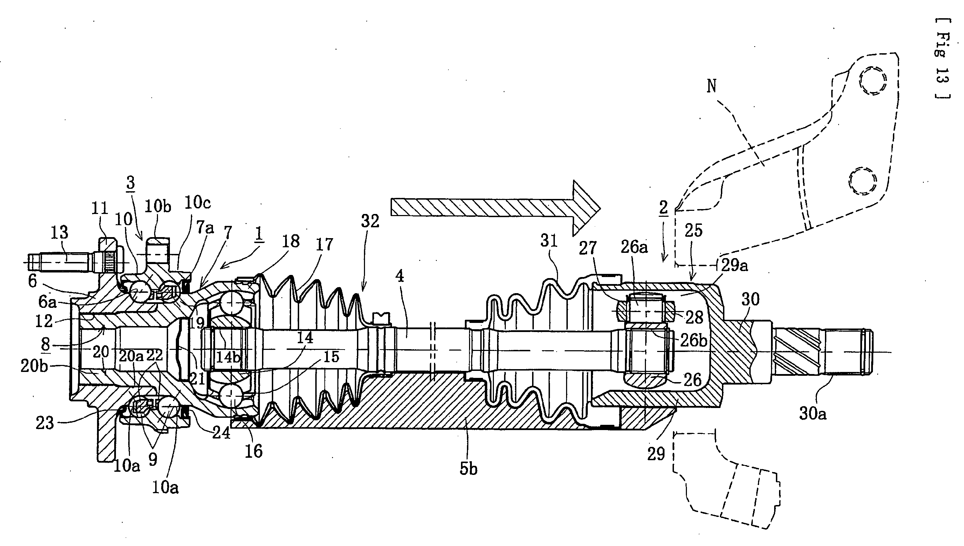

Preferable embodiments of the present invention will be hereinafter described with reference to the drawings. Fig. 1 is a longitudinal section view showing a first embodiment of an axle module on which a unit cover of the present invention is mounted, Fig. 2 is an enlarged longitudinal section view showing a wheel bearing apparatus of Fig. 1, Fig. 3 is a partially enlarged view of Fig. 2, Fig. 4(a) is a cross section view along a line IV-IV of Fig. 3, and Fig. 4(b) is a partially enlarged view of Fig. 4(a), Fig. 5(a) is a partially enlarged view of a condition before caulking, and Fig. 5(b) is a partially enlarged view of a condition after caulking, Figs. 6(a) and 6(b) are explanatory view showing a gap measuring method during assembly, Figs. 7(a) and 7(b) are explanatory view showing rotational torque measuring method before and after caulking, Fig. 8 is a graph showing a relation between a starting torque and an amount of elastic displacement in the axial direction, Fig. 9 is a graph showing a pre-load amount and a starting torque of the bearing, Fig. 10 is an explanatory view showing a method for assembling a unit cover of Fig. 1, Fig. 11 is a longitudinal section view showing another unit cover, Fig. 12 is an explanatory view showing a method for assembling the axle module and the knuckle, and Fig. 13 is an explanatory view showing another assembling method. In the description below, a term "outer side" (left hand side in the drawings) of the apparatus denotes a side which is positioned outside of the vehicle body and a term "inner side" (right hand side in the drawings) of the apparatus denotes a side which is positioned inside of the body when the bearing apparatus is mounted on the vehicle body.

As shown in Fig. 1, an axle module of the present invention comprises a pair of constant velocity universal joint 1, 2, a wheel bearing apparatus which is formed as a unit of a double row rolling bearing 3 rotationally supporting a wheel (not shown) and the constant velocity universal joint 1 of the outer side, a drive shaft 4 connected to the pair of the constant velocity universal joint 1, 2, and a unit cover 5 for protecting the pair of constant velocity universal joint 1, 2 and the drive shaft 4.

As shown in Fig. 2 the double row rolling bearing 3 forming the wheel bearing apparatus has a structure of a so-called fourth generation comprising an inner member 8 including a hub wheel 6 and an outer joint member 7 of the constant velocity universal joint 1, and an outer member 10 inserted around the inner member 8 via double row rolling elements (balls) 9, 9. The hub wheel 6 is made of medium carbon steel including carbon of 0.40-0.80%by weight such as S53C and has a wheel mounting flange 11 on its outer side end portion. The hub wheel 6 is formed on its outer circumferential surface with an outer side inner raceway surface 6a and a cylindrical portion 6b axially extending from the inner receway surface 6a and on its inner circumferential surface with a recessed and projected portion 12 hardened as having its surface hardness of 54~64 HRC. It is preferable to use as the heat treatment a high frequency induction heating which can easily carry out local heating and setting of the depth of the hardened layer. A plurality of hub bolts 13 are mounted on the wheel mounting flange equidistantly spaced along the periphery of the wheel mounting flange 11.

As shown in Figs. 3 and 4, the recessed and projected portion 12 of the hub wheel 6 comprises a crossed-groove formed by crossing substantially orthogonally a plurality of annular independent grooves 12a formed by turning axially along the inner circumferential surface of the hub wheel 6 and a plurality of axial grooves 12b formed by broaching equidistantly along the inner circumferential surface of the hub wheel 6. Although not shown in drawings, the crossed-groove may be formed by helical grooves inclined opposite directions each other.

It is preferable that a bottom diameter d1 of the annular grooves 12a and a bottom diameter d2 of the axial grooves 12b are perfectly equalized and thus the height of the circumferential projections and that of the axial projections are equalized each other so as to form a group of pyramids each having a sharp tip in projections of the recessed and projected portion 12. However it is difficult in fact to equalize the bottom diameters d1, d2 each other since machined surfaces formed by turning and broaching exist in a mingled manner. Accordingly the bottom diameter d1 of the annular grooves 12a is set smaller than the bottom diameter d2 of the axial grooves 12b (d1≤d2). This enables to improve the machining accuracy by suppress vibration in machining process with avoiding discontinuous cutting during formation of the axial grooves 12b after the formation of the annular grooves 12a.

The amount of radial expansion of the fitting portion 20b of the shaft portion 20 is suppressed so that the material of the shaft portion 20 does not extend to the bottoms of the axial grooves 12b and thus voids 34 are remained in the recessed portions 12ba of the axial grooves 12b as shown in Fig. 4(b). More in detail, the cross sectional configuration of each axial groove 12b is formed of the recess (bottom of groove) 12ba of a circular arc and a projection (tip) 12bb is formed of substantially straight lines, and the included angle if the projection 12bb is set to substantially 90°. The biting of the recessed and projected portion 12 into the shaft portion 20 is suppressed by projections 12bb formed by linear outline so that the void 34 can be remained in the recess 12ba. This enables suppress deformation of the hub wheel 6 and thus excessive stress in the hub wheel 6 and accordingly it is possible to provide the wheel bearing apparatus of the fourth generation type which can keep the durability for a long term and improve its reliability.

The outer member 10 is made of medium carbon steel including carbon of 0.40-0.80%by weight such as S53C and integrally formed on its outer circumferential surface with a body mounting flange 10b to be mounted on a knuckle (not shown) forming a suspension apparatus of a vehicle and on its inner circumferential surface with double row outer raceway surfaces 10a, 10a. The double row outer raceway surfaces 10a, 10a are hardened by high frequency induction quenching so as to have a surface hardness of 58~64 HRC.

The constant velocity universal joint 1 comprises the outer joint member 7, a joint inner ring 14, a cage 15 and torque transmitting balls 16. The outer joint member 7 is made of medium carbon steel including carbon of 0.40-0.80%by weight such as S53C and integrally formed by a cup shaped mouth portion 18 on which a plastic boot 17 is mounted around the periphery of an opening, a shoulder 19 forming a bottom of the mouth portion 18 and formed with the other (inner side) inner raceway surface 7a on its outer circumferential surface, and a hollow shaft portion 20 axially extending from the shoulder portion 19. The shaft portion 20 is formed on its outer circumferential surface with a spigot portion 20a fitted into the cylindrical portion 6b of the hub wheel 6 via a predetermined interference and a fitting portion 20b axially extending from the spigot portion 20a. In addition leakage of lubricating oil contained in the mouth portion 18 and ingress of rain water or dusts into inside of the joint from the outside can be prevented by the boot 17 and an end cap 21 fitted in the shoulder 19 of the outer joint member 7.

The mouth portion 18 is formed with on its inner circumferential surface eight curved track grooves 18a and the joint inner ring 14 is formed on its outer circumferential surface with eight track grooves 14a corresponding to the track grooves 18a. The torque transmitting balls 16 are contained between the track grooves 18a, 14a and held therein by the cage 15. The track grooves 18a, the shoulder portion 19 and the shaft portion 20 are hardened so as to have a surface hardness of 58~64 HRC however the fitting portion 20b of the shaft portion 20 is remained not-hardened.

Double row balls 9, 9 are contained between the double row inner raceway surfaces 6a, 7a of the inner member 8 and the double row outer raceway surfaces 10a, 10a of the outer member 10 and held therein freely rollably by cages 22, 22. Seals 23, 24 are arranged in annular openings formed between the outer member 10 and the hub wheel 6/outer joint member to prevent leakage of lubricating oil contained in the bearing and ingress of rain water or dusts into the bearing from the outside.

The shaft portion 20 of the outer joint member 7 is press fitted into the hub wheel 6 via the interference fit having a some interference. In this condition, as shown in Fig. 5(a), the axial gap of the bearing is set to a negative gap in the pitch dimension P0 and an axial gap S1 is formed between the end face of the cylindrical portion 6b and the shoulder portion 19 of the outer joint member 7. Then the hub wheel 6 and the outer joint member 7 are integrally connected via a plastically deformed caulking by inserting an expanding tool such as a mandrel into the fitting portion 20b of the shaft portion 20 from the outer side, by radially expanding the fitting portion 20b and by biting a hardened recessed and projected portion 12 formed on the inner circumferential surface of the hub wheel 6 into the fitting portion 20b of the shaft portion 20. The end face of the cylindrical portion 6b of the hub wheel 6 is butted against the shoulder portion 19 of the outer joint member 7 by the caulking process as shown in Fig. 5(b). Accordingly the axial gap of the bearing is further increased by a gap S1 as a negative gap and become a predetermined axial gap of a pitch dimension P1 (P1=P0-P1). Thus it is possible to easily and stably control the negative gap of the bearing since the axial gap of the bearing can be additionally reduced by the caulking process.

Then a method for measuring the bearing gap during the assembly of the wheel bearing apparatus will be described using Figs 6 and 7. As shown in Fig. 6(a), the outer joint member 7 is press fitted into the cylindrical portion 6b of the hub wheel 6 and stopped once just before the shoulder portion 19 of the outer joint member 7 is butted to the cylindrical portion 6b of the hub wheel 6. At this point of time, the axial gap of the bearing is positive and the predetermined axial gap S1 is remained between the cylindrical portion 6b of the hub wheel 6 and the shoulder 19 of the outer joint member 7. In this condition, an axial dimension H0 from a reference surface (end face of the mouth portion 18) 18b of the outer joint member 7 to a reference surface (side face of the flange 11) 11a is measured and an initial axial gapδ0 of the bearing is measured from an axial shift amount of the outer member 10 relative to the inner member 8.

As shown in Fig. 6(b), the outer joint member 7 is press fitted into the hub wheel 6 until the shoulder portion 19 of the outer joint member 7 abuts against the end face of the cylindrical portion 6b and then an axial dimension H1 from the reference surface 18b of the outer joint member 7 to the reference surface 11a of the hub wheel 6 is measured. Thus the axial gap δ in this case can be calculated from a following formula: δ1 = δ0 - (H0-H1). The axial gapδ1 of the bearing before the caulking is set negative in this case. It is possible to stop the press fitting of the outer joint member 7 with remaining a slight axial gap in place of press fitting the outer joint member 7 into the hub wheel 6 until the shoulder 19 is abutted against the cylindrical portion 6b and to obtain a desirable bearing gap (negative gap) by pushing the outer joint member 7 toward the outer side by caulking process and then by abutting the shoulder portion 19 of the outer joint member 7 against the cylindrical portion 6b of the hub wheel 6.

On the other hand, the rotational torque T1 before the caulking process of the bearing is measured as shown in Fig. 7(a). That is, the rotational torque of a rotational member "R" is measured by longitudinally placing the wheel bearing apparatus and mounting the rotational member "R" on the body mounting flange 10b of the outer member 10. In this case, since the rotational torque T1 of the bearing before the caulking can be measured by a torque measuring instrument T/S with setting the axial gapδ1 to a negative gap and rotating the rotational member "R" by engaging the rotational member "R" with a bolt inserting aperture 10c formed in the body mounting flange 10b, it is possible to stabilize the measurement of rotational torque, to suppress an influence of the angular run-out of the bearing to the measurement and thus to accurately measure the rotational torque.

Then the hub wheel 6 and the outer joint member 7 are integrally connected via a plastically deformed caulking by inserting an expanding tool such as a mandrel into the fitting portion 20b of the shaft portion 20 from the outer side, by radially expanding the fitting portion 20b and by biting a hardened recessed and projected portion 12 formed on the inner circumferential surface of the hub wheel 6 into the fitting portion 20b of the shaft portion 20. Then the rotational torque T2 of the bearing after the caulking is measured by the torque measuring instrument T/S as shown in Fig. 7 (b). The negative gap of the bearing is increased by the caulking and the rotational torque T2 after the caulking is increased as compared with the rotational torque T1 before the caulking (T2>T1). Although the measurement of the rotational torque of the bearing is illustrated and described, a starting torque of the bearing may be measured in place of the measurement of the rotational torque.

There is a correlation between the pre-load amount and the rotational torque (or the starting torque) and the amount of elastic displacement. Accordingly, the rotational torque T can be obtained by previously setting a relation formula from the relation between the rotational torque and the amount of elastic displacement and then by substituting the axial gapδ1 after press fitting of the outer joint member 7 into the cylindrical portion 6b of the hub wheel 6 for the relation formula. Fig. 8 is an example showing the relation between the starting torque of the bearing and the amount of elastic displacement. Furthermore the rotational torque T3 (T3=T+ΔT) can be obtained by adding a torque increment ΔT (ΔT=T2-T1) to the rotational torque T. The amount of elastic displacement of the bearing can be obtained by substituting the rotational torque T3 for the relation formula between the rotational torque and the amount of elastic displacement. This amount of elastic displacement becomes the axial gap (negative gap) of the bearing after caulking. In addition, it is possible to obtain the pre-load amount of the bearing by substituting said rotational torque T3 for the relation formula between the pre-load amount and the rotational torque. Fig. 9 is an example showing the relation between the pre-load amount of the bearing and the starting torque.

As described above, since the axial gap of the bearing before the caulking is set to the negative gap, and since the axial gap of the bearing is obtained by calculating the rotational torque T3 by adding the increment ΔT of the rotational torque obtained from the rotational torque T1, T2 respectively measured before and after the caulking to the rotational torque T obtained from the axial gap previously measured δ1 before the caulking and then by substituting the rotational torque T3 for the relation formula between the rotational torque and the amount of elastic displacement, it is possible to exclude causes causing the variation of rotational torque such as the positive gap of bearing, agitating resistance of lubricating grease sealed within the bearing, the interference of seals, etc. and to exactly and stably set the bearing gap. That is, the axial gap before the connection between the hub wheel and the outer joint member via plastic deformation can be stably measured by the rotational torque etc. and the bearing gap can be exactly controlled with suppressing the influence of angular run-out of the bearing. In addition it is possible to exactly measure the gap variation due to the plastic deformation and thus to easily obtain an optimum bearing gap and to extend the service life of the bearing.

A region of the outer circumferential surface of the hub wheel 6 forming a seal land portion on which sealing lips of an outer side seal 23 slides and the cylindrical portion 6b is hardened by high frequency induction quenching so as to have a predetermined surface hardness of 58~64 HRC. This enables to improve not only the wear resistance of the seal land portion but the mechanical strength and durability of the hub wheel 6 against the rotary bending moment. It is preferable to leave the fitting portion 20b to be radially expanded as a not-hardened region having a surface hardness less than 24 HRC after forging and to set a difference in hardness more than 30 HRC as compared to said surface hardness 54~64 HRC of the recessed and projected portion 12 of the hub wheel 6. This enables the recessed and projected portion 12 to easily and deeply bite into the material of the fitting portion 20b and thus rigidly connect the recessed and projected portion 12 and the fitting portion 20b without causing deformation of tips of the projections.

A relation between an outer diameter Da of the fitting surface 10c of the outer member 10 to be fitted into the knuckle and a maximum outer diameter of the joint assembly 32 later mentioned (in this case an outer diameter Db of the unit cover 5) is set as Da≥Db. This makes it possible to mount a previously assembled double row rolling bearing 3 and constant velocity universal joint 1 to the knuckle and thus to further improve the workability in assembling the axle module to a vehicle and in checks or service of the axle module.

Although it is shown as an example the constant velocity universal joint 1 of a compact type using 8 balls, the present invention is not limited to such an example and any constant velocity universal joint satisfying the condition Da≥Db may be used and thus a generally used constant velocity universal joint having six balls may be used. In addition any type of constant velocity universal joint may be used in the present invention. For example that having straight track grooves and a so-called "undercut free type" constant velocity universal joint may be used if it is a secured type constant velocity universal joint.

As shown in Fig. 1, one end of the drive shaft 4 is inserted into the joint inner ring 14 of the outer side constant velocity universal joint 1 via a serration 14b and the other end of the drive shaft 4 is inserted into a tripod member 26 of the slide type constant velocity universal joint 2 connected to a differential apparatus (not shown) via a serration 26b.

The slide type constant velocity universal joint 2 of inner side comprises the outer joint member 25, the tripod member 26 having three legs 26a equidistantly projected from its outer circumferential surface, and rollers 28 rollably mounted on the legs 26a via needle bearings. The outer joint member 25 is made of medium carbon steel including carbon of 0.40-0.80%by weight such as S53C and comprises a hollow cylindrical portion 29 and a shaft portion 30 extending from the bottom of the cylindrical portion 29. The shaft portion 30 is formed on its outer circumferential surface with serration 30a to be connected to the differential apparatus.

Three axially extending straight track grooves 29a are formed on the inner circumferential surface of the cylindrical portion 29 and the rollers 28 roll on the track groove 29a. The surfaces of the track grooves 29a and the shaft 30 are hardened by high frequency induction quenching so as to form a predetermined hardened layer of 58~64 HRC. An opening of the cylindrical portion 29 is covered by a boot 31 of synthetic rubber to prevent leakage of grease contained in the cylindrical portion 29 and ingress of rain water and dusts from outside into the joint member 25. Although it is shown an example of the inner side constant velocity universal joint 2 of a tripod type, any sliding type constant velocity universal joint may be used for example as other tripod type having a different structure and a double offset type constant velocity universal joint (DOJ).

According to the present invention, a cylindrical unit cover 5 is mounted on the outer joint members7, 25 of the pair of constant velocity universal joints 1, 2 respectively for covering the outer circumferential surfaces of the constant velocity universal joints 1, 2 and the drive shaft 4 (hereinafter referred to as "joint assembly"). The unit cover 5 is made by injection molding of elastomer such as PA (polyamide) 66 and formed of a two-separated structure comprising an upper cover 5a and an under cover 5b as shown in Fig. 10. The unit cover 5 has a straight cylindrical outer surface and an inner surface formed as having a configuration corresponding to outlines of the outer joint members 7, 25 and boots 17, 31. This enables to protect the joint assembly 32 and to prevent the constant velocity universal joints from being hung down by their own weight. Accordingly it is possible to provide an axle module which is easy in handling during its transportation and assembly and can improve the workability in its assembly to a vehicle.

Although the unit cover 5 is shown as an upper and lower two separated type, any other types of unit cover may be used in the present invention which can be radially separated and mounted on the joint assembly from the outside thereof. For example, three separated type of unit cover may be used or a two separated type in which two halves are connected each other by a hinge may be also used. The unit cover 5 may be made of suitable material e.g. POM (polyacetal), PBT (polybutyleneterephthalate), PET (polyethyleneterephthalate) etc. other than PA 66. In addition the material forming the unit cover 5 is not limited to these thermoplastic resin and other material of low price and good formability such as synthetic rubber having a predetermined rigidity may be also used.

The outline configuration of the unit cover 5 is not limited to a cylinder and a configuration shown in Fig. 11 may be used. This unit cover 33 has an inner circumferential surface having a configuration corresponding to outlines of the outer joint members 7, 25 and boots 17, 31 similarly to the unit cover 5 previously described and an outer circumferential surface of a streamlined configuration recessed at its substantially center in an axial direction. This enables to improve the workability of assembling the axle module to a knuckle and to reduce the weight and size of the axle module.

Fig. 12 is an explanatory drawing showing a method for mounting the knuckle "N" to the axle module comprising the wheel bearing apparatus including the joint assembly 32. Since the unit cover 5 is mounted on the joint assembly 32, the constant velocity universal joints 1, 2 are prevented from being hung down by their own weight and thus their angular attitude is stabled. Accordingly it is possible to smoothly insert the knuckle "N" from the inner side constant velocity universal joint 2 toward the body mounting flange 10b of the outer member 10 along the outer surface of the unit cover 5 as shown by an arrow. Further it is possible to prevent the axle module from being contaminated or damaged and thus to keep the mounted condition in place until assembly of a corner module of suspension apparatus or a vehicle is carried out.

Then a method for assembling the axle module to the knuckle "N" which has been already mounted on a suspension apparatus will be described in detail using Fig. 13. In this case only the lower cover 5b of the unit cover 5 is used. That is, the joint assembly 32 on which the lower cover 5b is mounted to prevent the hanging down of the constant velocity universal joints 1, 2 by its own weight is inserted into the knuckle "N" with contacting the lower cover with an inner circumferential surface of a bore of the knuckle "N" and sliding thereon as shown by an arrow. This enables to reduce the weight of the axle module it self and to increase a radial space between the knuckle "N" and the axle module and thus the workability in assembly can be further improved.

Although it is shown an example of a structure of wheel bearing apparatus of the fourth generation type formed as a unit of combination of the hub wheel 6, the double row rolling bearing 3, and the constant velocity universal joint 1, it should be noted that a wheel bearing apparatus of the third generation type in which the constant velocity universal joint is detachably connected via a serration may be used in the present invention since the unit cover 5 is intended to be used to protect the joint assembly 32 and to to improve the workability in assembly of the axle module.

### Embodiment 2

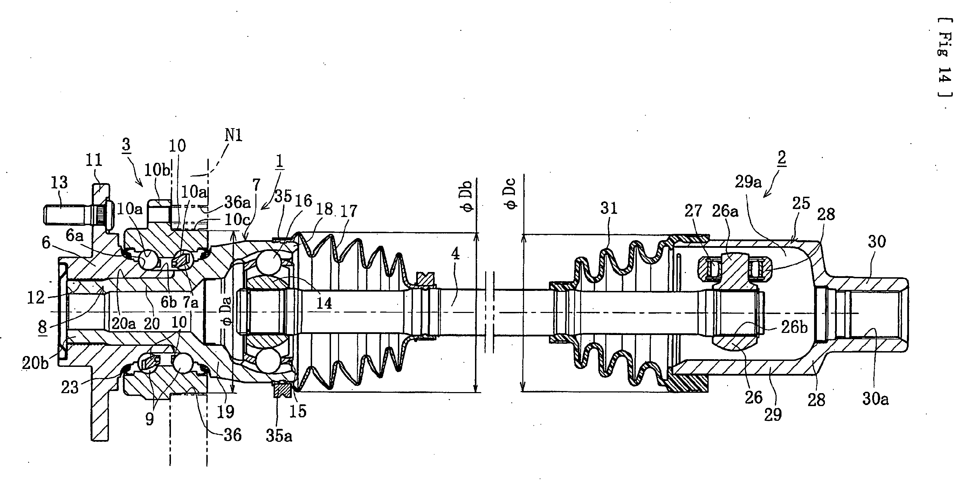

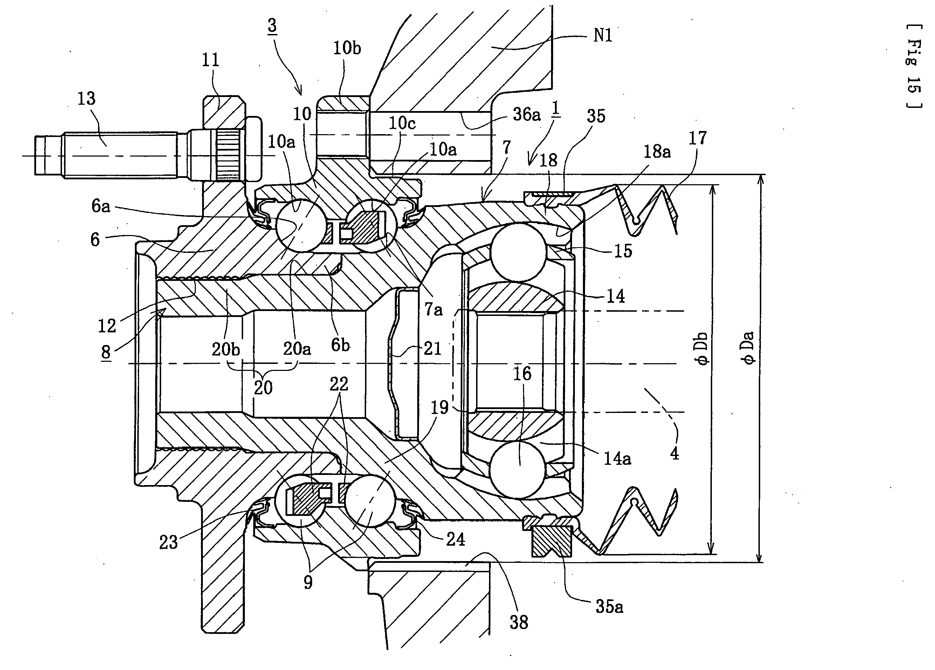

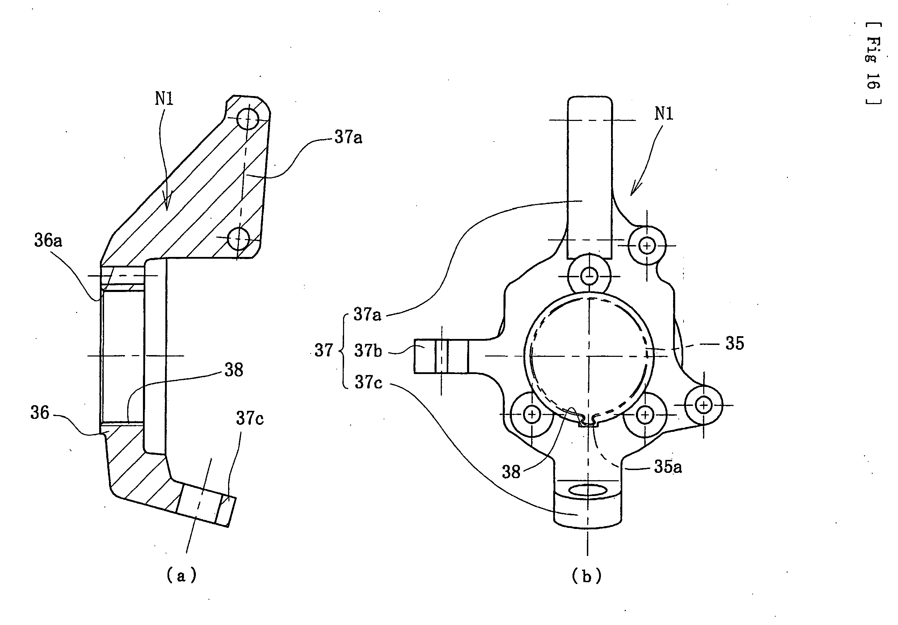

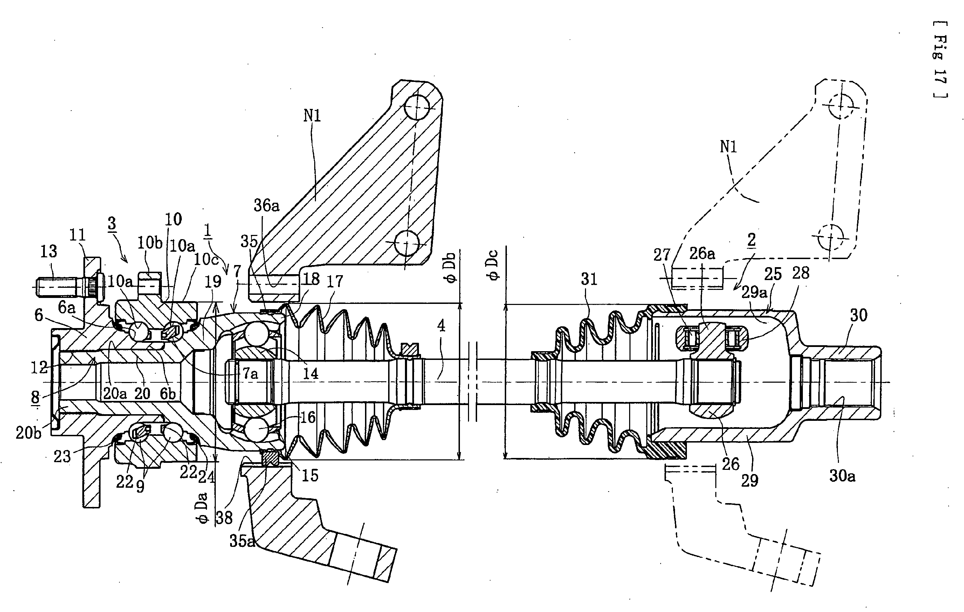

Fig. 14 is a longitudinal section view showing a second embodiment of an axle module not belonging to the present invention, Fig. 15 is a longitudinal section view showing a wheel bearing apparatus of Fig. 14, Fig. 16(a) is a longitudinal section view showing a knuckle of the present invention, Fig. 16(b) is a front elevation view thereof, and Fig. 17 is an explanatory view showing a method for assembling the axle module of the present invention to a vehicle. Same reference numerals are used herein for designating same parts as those having same functions used in the first embodiment.

This axle module is intended to transmit a power from an engine to a wheel and to rotationally support the wheel relative to a suspension apparatus of a vehicle. The fundamental structure of the axle module comprises a wheel bearing apparatus formed as a unit of the hub wheel 6, the double row rolling bearing 3 and the secured type constant velocity universal joint 1; and the slide type constant velocity universal joint 2 connected to the constant velocity universal joint 1 via the drive shaft 4.

In this embodiment the maximum outer diameter Dc of the constant velocity universal joint 2 forms an outer diameter of a boot 31.

As shown in the enlarged view of Fig. 15, the wheel bearing apparatus has a structure of the fourth generation type in which the hub wheel 6, the double row rolling bearing 3, and the constant velocity universal joint 1 is formed as a unit. The outer member 10 of the double row rolling bearing 3 is integrally formed on its outer circumferential surface with the body mounting flange 10b to be mounted on the knuckle N1 forming part of the suspension apparatus and the fitting surface 10c to be fitted into the knuckle N1 is formed on the body mounting flange 10b at the inner side thereof.

A bellows shaped boot 17 for example of thermoplastic resin is mounted on the outer circumferential portion at an opening side of the mouth portion 18 and on the drive shaft 4. The boot 17 allows the outer joint member 7 to bend relative to the drive shaft 4 and prevents cooperating with the end cap 21 mounted on the hollow shaft portion 20 grease contained within the mouth portion 18 from being leaked therefrom and rain water or dusts from entering into the inside of the bearing. Although such kind of a boot 17 of plastic resin has high strength and durability, its rigidity is higher than that of a conventional boot made of synthetic resin and thus it is necessary to fasten its opened end by a boot band 35. This boot band 35 is formed on its outer circumferential surface with circumferentially extending pleats (not shown) and also formed on a portion of the outer circumferential surface with a projection 35a. The projection 35a is caulked to reduce the diameter of the boot band 35 in order to uniformly and rigidly fasten the boot 17.

In this embodiment since the boot 17 is used and the boot 17 is secured by the caulking type boot band 35, the projection 35a project radially outward larger than the outer diameter of the boot 17 which forms the maximum outer diameter Db of the constant velocity universal joint 1. Accordingly since the outer diameter of the projection 35a is larger than the outer diameter (i.e. the inner diameter of the knuckle N1) Da of the fitting surface 10c of the outer member 10, the knuckle N1 cannot pass through the outer diameter of the constant velocity universal joint 1 and thus assembly of the wheel bearing apparatus to a vehicle is impossible.

As shown in Fig. 16, the knuckle N1 comprises a securing portion 36 adapted to be fitted onto the fitting surface 10c of the outer member 10 and a connecting portion 37 including arms 37a, 37b, 37c to be connected to a suspension apparatus (not shown). In this embodiment the securing portion 36 is formed with bolt apertures 36a for securing bolts (not shown) and an axially extending slit 38 having a substantially rectangular cross section and for permitting passage of the projection 35a of the boot band 35. This slit 38 enables to assemble the constant velocity universal joint 1 to a vehicle by inserting it into the knuckle N1 without the knuckle N1 interfering the boot band 35 only by aligning the position of the projection 35a with that of the slit 38. In addition since the maximum outer diameter of the inner side constant velocity universal joint 2 (in this case the outer diameter of the boot 31) Dc is set smaller than the maximum outer diameter of the outer side constant velocity universal joint 1 (in this case the outer diameter of the boot 17) Db, it is possible to assemble the axle module comprising the pair of constant velocity universal joints 1, 2, the drive shaft 4 connected to these constant velocity universal joints 1, 2, and the wheel bearing apparatus as a unit to a vehicle. In other words, it is possible to easily assemble the axle module to the knuckle N1, to realize modularization of a suspension and its related parts, and thus to further improve the workability in assembly of a vehicle.

Then a method for inserting the knuckle N1 onto the axle module using Fig. 17.
Firstly the knuckle N1 is passed over the constant velocity universal joint 2 from the inner side (right hand side in Fig. 17) thereof. Then the knuckle N1 is moved toward the constant velocity universal joint 1 with aligning the slit 38 formed on the knuckle N1 with the projection 35a of the boot band 35. Then the knuckle N1 is fitted on the fitting surface 10c of the outer member 10, and finally the knuckle N1 is fastened to the outer member 10 by bolts (not shown).

According to this embodiment since the knuckle N1 is formed with the slit 38 allowing passage of the projection 35a of the boot band 35, it is possible to pass the knuckle N1 over the axle module and thus to reduce the weight and size of the knuckle N1 and its related suspension parts as well as to improve the workability in assembly of the axle module to a vehicle.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industries

The wheel bearing apparatus of the present invention can be applied to the wheel bearing apparatus of the fourth generation type in which the hub wheel forming the bearing portion and the outer joint member of the constant velocity universal joint are united each other via plastic deformation between them. The unit cover is mounted on constant velocity universal joints and a drive shaft connected thereto forming a power transmitting apparatus of a vehicle for protecting the constant velocity universal joints and improving the workability in assembly thereof and can be applied to an axle module of any power transmitting apparatus despite of types of the constant velocity universal joints and wheel bearings connected thereto.

### Brief Description of the Drawings

Fig. 1 is a longitudinal section view showing a first embodiment of an axle module on which a unit cover of the present invention is mounted;
Fig. 2 is an enlarged longitudinal section view showing a wheel bearing apparatus of Fig. 1;
Fig. 3 is a partially enlarged view of Fig. 2;
Fig. 4(a) is a cross section view along a line IV-IV of Fig. 3, and Fig. 4(b) is a partially enlarged view of Fig. 4(a);
Fig. 5(a) is a partially enlarged view of a condition before caulking , and Fig. 5(b) is a partially enlarged view of a condition after caulking,;
Figs. 6(a) and 6(b) are explanatory view showing a gap measuring method during assembly;
Figs. 7(a) and 7(b) are explanatory view showing rotational torque measuring method before and after caulking;
Fig. 8 is a graph showing a relation between a starting torque and an amount of elastic displacement in the axial direction;
Fig. 9 is a graph showing a pre-load amount and a starting torque of the bearing;
Fig. 10 is an explanatory view showing a method for assembling a unit cover. of Fig. 1;
Fig. 11 is a longitudinal section view showing another unit cover;
Fig. 12 is an explanatory view showing a method for assembling the axle module and the knuckle;
Fig. 13 is an explanatory view showing another assembling method;
Fig. 14 is a longitudinal section view showing a second embodiment of an axle module not belonging to the present invention;
Fig. 15 is a longitudinal section view showing a wheel bearing apparatus of Fig. 14;
Fig. 16(a) is a longitudinal section view showing a knuckle not belonging to the present invention, and Fig. 16(b) is a front elevation view thereof;
Fig. 17 is an explanatory view showing a method for assembling the axle module not belonging to the present invention to a vehicle;
Fig. 18 is a longitudinal section view showing one example of a power transmitting apparatus to which the wheel bearing apparatus has been assembled; and
Fig. 19 is a longitudinal section view showing an axle module to which a unit cover of the prior art is mounted.

### Explanations of Letters or Numerals

- 1, 2: constant velocity universal joint
- 3: double row rolling bearing
- 4: drive shaft
- 5, 33: unit cover
- 5a: upper cover
- 5b: under cover
- 6: hub wheel
- 6a, 7a: inner raceway surface
- 6b: cylindrical portion
- 7, 25: outer joint member
- 8: inner member
- 9: rolling elements
- 10: outer member
- 10a: outer raceway surfaces
- 10b: body mounting flange
- 10c: fitting surface
- 11: wheel mounting flange
- 11a: reference surface of the hub wheel
- 12: recessed and projected portion
- 12a: annular groove
- 12b: axial grooves
- 12ba: recess
- 12bb: projection
- 13: hub bolts
- 14: joint inner ring
- 14a, 18a, 29a: track grooves
- 14b, 26b, 30a: serration
- 15: cage
- 16: torque transmitting balls
- 17, 31: boot
- 18: mouth portion
- 18b: reference surface of the outer joint member
- 19: shoulder portion
- 20, 30: shaft portion
- 20a: spigot portion
- 20b: fitting portion
- 21: end cap
- 22: cage
- 23, 24: seal
- 26: tripod member
- 26a: legs
- 27: needle bearings
- 28: rollers
- 29: cylindrical portion
- 32: joint assembly
- 34: void
- 35: boot band
- 35a: projection
- 36: securing portion
- 36a: bolt apertures
- 37: connecting portion
- 37a, 37b, 37c: arm
- 38: slit
- 50: outer member
- 50a: outer raceway surface
- 50b: body mounting flange
- 50c: fitting surface
- 51: ball
- 52: wheel mounting flange
- 53: hub wheel
- 53a, 54a: inner raceway surface
- 54: outer joint member
- 55: inner member
- 56, 58: constant velocity universal joint
- 57: unit cover
- 57a, 57b: contracted portion
- 59, 100: drive shaft
- 101: slide type constant velocity universal joint
- 102: differential apparatus
- 103: secured type constant velocity universal joint
- 104: wheel bearing apparatus
- 105: wheel
- 106: wheel bearing
- Da: outer diameter of the fitting surface of the outer member
- Db: maximum outer diameter of the constant velocity universal joint
- H0,: H1 axial dimension from a reference surface of the outer joint member to a reference surface of the hub wheel
- JA: joint assembly
- N, N1: knuckle
- P0: pitch dimension before caulking process
- P1: pitch dimension after caulking process
- R: rotational member
- S1: axial gap formed between the end face of the cylindrical portion and the shoulder portion
- T, T1, T2, T3: rotational torque
- ΔT: torque increment
- T/S: torque measuring instrument
- δ0, δ1: axial gap

## Claims

1. A joint assembly comprising a pair of constant velocity universal joints (1, 2) and a drive shaft (4) connected to the constant velocity universal joints (1, 2) in which:
one constant velocity universal joint (1) of the pair of constant velocity universal joints is a secured type constant velocity universal joint and includes: an outer joint member (7) formed on its inner circumferential surface with a plurality of curved and axially extending track grooves (18a); a joint inner ring (14) formed on its outer circumferential surface with track grooves (14a) oppositely to the track grooves (18a); torque transmitting balls (16) contained within ball tracks formed by the track grooves (14a, 18a); a cage (15) for rollably holding the torque transmitting balls (16) within the ball tracks; the drive shaft (4) one end of which being connected to the joint inner ring (14), and a boot (17) mounted on the drive shaft (4) and on an outer circumferential portion at an opened side of the outer joint member (7);
and the other constant velocity universal joint (2) of the pair of constant velocity universal joints is a slide type constant velocity universal joint and includes another boot (31) and is connected to the other end of the drive shaft (4), wherein a cylindrical unit cover (5) is arranged so that it covers outer circumferential surfaces of the pair of constant velocity universal joints (1, 2) and boots (17, 31) thereof, **characterized in that** the unit cover is formed of elastomer by injection molding and has on its inner circumferential surface a configuration corresponding to configurations of outlines of the pair of constant velocity universal joints (1, 2) and the boots (17, 31).

2. A joint assembly of claim 1 wherein the unit cover (5) is separated in its radial direction.

3. A joint assembly of claim 1 or 2 wherein the unit cover (5) is formed so that it has an outline of a streamlined configuration recessed at its substantially center in an axial direction.

4. An axle module comprising:
a wheel bearing apparatus, the wheel bearing including:
an outer member (10) formed on its outer circumferential surface with a body mounting flange (10b) adapted to be mounted on a knuckle (N, N1) forming a portion of a suspension apparatus and a fitting surface (10c) and on its inner circumferential surface with double row outer raceway surfaces (10a, 10a);
an inner member (8) including a hub wheel (6) integrally formed on its one end with a wheel mounting flange (11) and on its outer circumferential surface with one inner raceway surface (6a) opposite to one of the double row outer raceway surfaces (10a, 10a) and also including an outer joint member (7) of the constant velocity universal joint (1) adapted to be fitted into the hub wheel (6) and formed on its outer circumferential surface with another inner raceway surface (7a) opposite to the other one of the double row outer raceway surfaces (10a, 10a); and
a plurality of rolling elements (9) freely rollably contained between the inner member (8) and the outer member (10);
a joint assembly (32) of any one of claims 1∼3 connected to the hub wheel (6) via a torque transmittable manner; and
a unit cover (5) for covering the joint assembly (32) **characterized in:**
**that** the outer diameter (Da) of the fitting surface (10c) of the outer member (10) is formed larger than the outer diameter (Db) of the unit cover (5).

## Patentansprüche

1. Verbindungsanordnung, umfassend ein Paar von Gleichlaufgelenken (1, 2) und eine Antriebswelle (4), die mit den Gleichlaufgelenken (1, 2) verbunden ist, wobei ein Gleichlaufgelenk (1) des Paars von Gleichlaufgelenken ein Gleichlaufgelenk vom fixierten Typ ist und umfasst:
ein äußeres Gelenkelement (7), das an seiner inneren Umfangsfläche mit mehreren gekrümmten und sich in der Achsenrichtung erstreckenden Laufbahnrillen (18a) ausgeführt ist; einen Gelenkinnenring (14), der an seiner äußeren Umfangsfläche mit Laufbahnrillen (14a), die den Laufbahnrillen (18a) gegenüberliegen, ausgeführt ist;
drehmomentübertragende Kugeln (16), die in Kugellaufbahnen, welche durch die Laufbahnrillen (14a, 18a) gebildet sind, enthalten sind; einen Käfig (15), um die drehmomentübertragenden Kugeln (16) wälzfähig in den Kugellaufbahnen zu halten; die Antriebswelle (4), wovon ein Ende mit dem Gelenkinnenring (14) verbunden ist; und
eine Dichtungsmanschette (17), die an der Antriebswelle (4) und an einem äußeren Umfangsabschnitt an der geöffneten Seite des äußeren Gelenkelements (7) angebracht ist;
und das andere Gleichlaufgelenk (2) des Paars von Gleichlaufgelenken ein Gleichlaufgelenk vom gleitenden Typ ist und eine andere Dichtungsmanschette (31) umfasst und mit dem anderen Ende der Antriebswelle (4) verbunden ist, wobei eine zylinderförmige Einheitsabdeckung (5) so angeordnet ist, dass sie die äußere Umfangsflächen des Paars von Gleichlaufgelenken (1, 2) und ihrer Dichtungsmanschetten (17, 31) abdeckt,
**dadurch gekennzeichnet, dass** die Einheitsabdeckung durch Spritzguss aus einem Elastomer gebildet ist und an ihrer inneren Umfangsfläche eine Gestaltung aufweist, die den Gestaltungen der Umrisse des Paars von Gleichlaufgelenken (1, 2) und der Dichtungsmanschetten (17, 31) entspricht.

2. Verbindungsanordnung nach Anspruch 1, wobei die Einheitsabdeckung (5) in ihrer radialen Richtung getrennt ist.

3. Verbindungsanordnung nach Anspruch 1 oder 2, wobei die Einheitsabdeckung (5) so gebildet ist, dass sie einen Umriss mit einer stromlinienförmigen Gestaltung aufweist, der in seiner wesentlichen Mitte in einer Achsenrichtung vertieft ist.

4. Achsmodul, umfassend:
eine Radlagervorrichtung, wobei die Radlagervorrichtung ein äußeres Element (10), das an seiner äußeren Umfangsfläche mit einem Aufbauanbringungsflansch (10b),
der zur Anbringung an einem Achsschenkel (N, N1), welcher einen Teil einer Aufhängungsvorrichtung bildet, geeignet ist, und mit einer Passfläche (10c) und an seiner inneren Umfangsfläche mit zwei Reihen von äußeren Laufringflächen (10a, 10a) versehen ist;
ein inneres Element (8), das eine Radnabe (6) beinhaltet, welche einstückig an einem Ende davon mit einem Radanbringungsflansch (11) und an einer äußeren Umfangsfläche mit einer inneren Laufringfläche (6a), die einer der beiden Reihen von äußeren Laufringflächen (10a, 10a) gegenüberliegt, versehen ist, und die auch ein äußeres Gelenkelement (7) des Gleichlaufgelenks (1) beinhaltet, welches zur Passung in die Radnabe (6) geeignet ist und an seiner äußeren Umfangsfläche mit einer anderen inneren Laufringfläche (7a), die der anderen der beiden äußeren Laufringflächen (10a, 10a) gegenüberliegt, ausgeführt ist; und
mehrere Wälzelemente (9), die frei wälzfähig zwischen dem inneren Element (8) und dem äußeren Element (10) enthalten sind,
beinhaltet;
eine Verbindungseinheit (32) nach einem der Ansprüche 1 bis 3, die über eine drehmomentübertragungsfähige Weise mit dem Nabenrad (6) verbunden ist; und
eine Einheitsabdeckung (5) zum Abdecken der Verbindungseinheit (32),
**dadurch gekennzeichnet, dass**
der Außendurchmesser (Da) der Passfläche (10c) des äußeren Elements (10) größer als der Außendurchmesser (Db) der Einheitsabdeckung (5) ausgeführt ist.

## Revendications

1. Ensemble de joint comprenant une paire de joints homocinétiques (1, 2) et un arbre de transmission (4) connecté aux joints homocinétiques (1, 2), dans lequel :
un joint homocinétique (1) de la paire de joints homocinétiques est un joint homocinétique de type fixe et comprend : un élément extérieur de joint (7), présentant sur sa surface extérieure de circonférence, une série de rainures incurvées et s'étendant axialement (18a) ; une bague intérieure de joint (14), présentant sur sa surface extérieure de circonférence, des rainures (14a) opposées au rainures (18a) ; des billes de transmission de couple (16) retenues dans les tracés formés par les rainures (14a, 18a) ; une cage (15) pour retenir de sorte qu'elles puissent rouler, les billes de transmission de couple (16) dans les tracés ; l'arbre de transmission (4), dont une extrémité est connectée à la bague intérieure de joint (14), et un capuchon (17) monté sur l'arbre de transmission (4) et sur une partie extérieure de circonférence, à un côté ouvert de l'élément extérieur de joint (7) ;
et l'autre joint homocinétique (2) de la paire de joints homocinétiques est un joint homocinétique de type coulissant et comprend un autre capuchon (31) et est connecté à l'autre extrémité de l'arbre de transmission (4), où un couvercle cylindrique d'unité (5) est disposé de manière à ce qu'il couvre les surfaces extérieures de circonférence de la paire de joints homocinétiques (1, 2) et leurs capuchons (17, 31), **caractérisé en ce que** le couvercle d'unité est formé d'un élastomère par moulage par injection et **en ce qu'**il présente sur sa surface interne de circonférence, une configuration correspondant aux configurations des contours de la paire de joints homocinétiques (1, 2) et leurs capuchons (17, 31).

2. Ensemble de joint selon la revendication 1, où le couvercle d'unité (5) est séparé en direction radiale.

3. Ensemble de joint selon la revendication 1 ou 2, où le couvercle d'unité (5) est formé de sorte qu'il présente le contour d'une configuration profilée en retrait sensiblement en son centre en direction axiale.

4. Module d'arbre comprenant :
un roulement de roue, le roulement de roue comprenant :
un élément extérieur (10) présentant sur sa surface extérieure, une bague de montage (10b) destinée à être montée sur une rotule (N, N1) formant une partie d'un appareil de suspension et une surface d'ajustage (10c), et sur sa surface interne de circonférence, des surfaces extérieures de tracé à double rangée (10a, 10a) ;
un élément intérieur (8) comprenant un moyeu de roue (6),
formé d'une pièce à une de ses extrémités, avec une bride de montage de roue (11) et sur se surface extérieure de circonférence, avec une surface intérieure de tracé (6a), opposée à l'une des surfaces extérieures de tracé à double rangée (10a, 10a) et comprenant également, un élément extérieur de joint (7) du joint homocinétique (1), adapté pour s'ajuster au moyeu de roue (6) et présentant sur sa surface extérieure de circonférence, une autre surface intérieure de tracé (7a) opposée à l'autre des surfaces extérieures de tracé à double rangée (10a, 10a) ; et une série d'éléments à roulement (9), pouvant rouler librement entre l'élément interne (8) et l'élément externe (10) ;
un ensemble de joint (32) selon l'une quelconque des revendications 1 à 3, connecté au moyeu de roue (6) de manière à transmettre le couple, et
un couvercle d'unité (5) pour couvrir l'ensemble de joint (32), **caractérisé en ce que** :
le diamètre extérieur (Da) de la surface d'ajustage (10c) de l'élément extérieur (10) est plus grand que le diamètre extérieur (Db) du couvercle d'unité (5).
